(19)

Europäisches
Patentamt
European
Patent Office
Office européen
des brevets

(11) **EP 1 912 161 A2**

(12) **EUROPEAN PATENT APPLICATION**

(43) Date of publication:
**16.04.2008 Bulletin 2008/16**

(51) Int Cl.:
***G06K 9/62*** *(2006.01)*

(21) Application number: **07010710.7**

(22) Date of filing: **30.05.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **11.10.2006 US 548377**

(71) Applicant: **Seiko Epson Corporation
Shinjuku-ku,
Tokyo 163-0811 (JP)**

(72) Inventors:
• **Zhou, Hui
Toronto ON M4J1W9 (CA)**
• **Wong, Alexander Sheung Lai
Scarborough ON M1V1S5 (CA)**

(74) Representative: **Grünecker, Kinkeldey,
Stockmair & Schwanhäusser
Anwaltssozietät
Maximilianstrasse 58
80538 München (DE)**

(54) **Method and apparatus for automatic image categorization**

(57) A method of automatically categorizing an input image comprises extracting features of the input image and generating a signature vector representing the input image. The signature vector is processed using diverse classifiers to classify the input image based on the combined output of the diverse classifiers.

Fig. 2

**Description**

**Field of the Invention**

The present invention relates to image processing and in particular to a method, apparatus and computer readable medium embodying a computer program for automatically categorizing images.

**Background of the Invention**

In large media management systems it is desired to categorize images that have general semantic similarity so that stored images can be efficiently and effectively retrieved. Categorizing images manually is time consuming and impractical especially where large numbers of images are being categorized and thus, techniques to automatically categorize images are desired.

Techniques for automatically categorizing images have been considered. For example, U.S. Patent No. 5,872,865 to Normile et al. discloses a system for automatically classifying images and video sequences. The system executes a classification application that is trained for an initial set of categories to determine eigen values and eigen vectors that define the categories. Input video sequences are then classified using one of orthogonal decomposition using image attributes, orthogonal decomposition in the pixel domain and neural net based classification. A set of primitive attributes based on average bin color histogram, average luminance on intensity, average motion vectors and texture parameters is generated for frames of the video sequence. Frames of the video sequence are transformed into canonical space defined by the eigen vectors allowing the primitive attributes to be compared to the eigen values and the eigen vectors defining the categories thereby to allow the frames to be classified.

U.S. Patent No. 6,031,935 to Kimmel discloses a method and apparatus for segmenting images using deformable contours. A priori information concerning a target object to be segmented i.e. its border, is entered. The target object is manually segmented by tracing the target object in training images thereby to train the apparatus. A search image is then chosen and a nearest-neighbour training image is selected. The traced contour in the training image is then transferred to the search image to form a search contour. The search contour is deformed to lock onto regions of the target object which are believed to be highly similar based on the a priori information and the training information. Final segmentation of the search contour is then completed.

U.S. Patent No. 6,075,891 to Burman discloses a non-literal pattern recognition method and system for hyperspectral imagery exploitation. An object is scanned to produce an image set defining optical characteristics of the object including non-spatial spectral information and electromagnetic spectral band data. A spectral signature from a single pixel in the image set is extracted. The spectral signature is then filtered and normalized and forwarded to a material categorization system to identify categories related to the sensed data. A genetic algorithm is employed that solves a constrained mixing equation to detect and estimate the abundance of constituent materials that comprise the input spectral signature.

U.S. Patent No. 6,477,272 to Krumm et al. discloses a system and process for identifying the location of a modelled object in a search image. Model images of the object, whose location is to be identified in the search image, are captured. Each model image is computed by generating counts of every pair of pixels whose pixels exhibit colors that fall within the same combination of a series of pixel color ranges and which are separated by a distance falling within the same one of a series of distance ranges. A co-occurrence histogram is then computed for each of the model images. A series of search windows is generated from overlapping portions of the search image. A co-occurrence histogram is also computed for each of the search windows using the pixel color and distance ranges established for the model images. A comparison between each model image and each search window is conducted to assess their similarity. The co-occurrence histograms from the model images and the search image windows are then compared to yield similarity values. If a similarity value is above a threshold, the object is deemed to be in the search window.

U.S. Patent No. 6,611,622 to Krumm discloses an object recognition system and process that identifies people and objects depicted in an image of a scene. Model histograms of the people and objects that are to be identified in the image are created. The image is segmented to extract regions which likely correspond to the people and objects being identified. A histogram is computed for each of the extracted regions and the degree of similarity between each extracted region histogram and each of the model histograms is assessed. The extracted region having a histogram that exhibits a degree of similarity to one of the model histograms, which exceeds a prescribed threshold, is designated as corresponding to the person or object associated with that model histogram.

U.S. Patent No. 6,668,084 to Minami discloses an image recognition method wherein search models are created that identify the shape and luminance distribution of a target object. The goodness-of-fit indicating correlation of the object for each one of the search models is calculated and the search models are rearranged based on the calculated goodness-of-fit. Object shapes are modelled as polygons and the luminance values are taken to be the inner boundaries of the polygons.

U.S. Patent Application Publication No. US2001/0012062 to Anderson discloses a system and method for analyzing and categorizing images. Analysis modules examine captured image files for selected criteria and then generate and store appropriate category tags with the images to enable desired categories of images to be automatically accessed. One analysis module analyzes the final line of image data at a red, green, blue (RGB) transition point to generate category tags. Another analysis module performs gamma correction and color space conversion to convert the image data into YCC format and then analyzes the final line of the image data at a YYC transition point to generate the category tags.

U.S. Patent Application Publication No. US2003/0053686 to Luo et al. discloses a method for detecting subject matter regions in a color image. Each pixel in the image is assigned a belief value as belonging to a subject matter region based on color and texture. Spatially contiguous candidate subject matter regions are formed by thresholding the belief values. The formed spatially contiguous subject matter regions are then analyzed to determine the probability that a region belongs to the desired subject matter. A map of the detected subject matter regions and associated probabilities is generated.

U.S. Patent Application Publication No. US2002/0131641 to Luo et al. discloses a system and method for determining image similarity. Perceptually significant features of the main subject or background of a query image are determined. The features may include color texture and/or shape. The main subject is indicated by a continuously valued belief map. The determined perceptually significant features are then compared with perceptually significant features of images stored in a database to determine if the query image is similar to any of the stored images.

U.S. Patent Application Publication No. US2002/0183984 to Deng et al. discloses a system and method for categorizing digital images. Captured images are categorized on the basis of selected classes by subjecting each image to a series of classification tasks in a sequential progression. The classification tasks are nodes that involve algorithms for determining whether classes should be assigned to images. Contrast-based analysis and/or meta-data analysis is employed at each node to determine whether a particular class can be identified within the images.

U.S. Patent Application Publication No. US2004/0066966 to Schneiderman discloses a system and method for determining a set of sub-classifiers for an object detection program. A candidate coefficient-subset creation module creates a plurality of candidate subsets of coefficients. The coefficients are the result of a transform operation performed on a two-dimensional digitized image and represent corresponding visual information from the digitized image that is localized in space, frequency and orientation. A training module trains a sub-classifier for each of the plurality of candidate subsets of coefficients. A sub-classifier selection module selects certain of the sub-classifiers. The selected sub-classifiers examine each input image to determine if an object is located within a window of the image. Statistical modeling is used to take variations in object appearance into account.

U.S. Patent Application Publication No. US2004/0170318 to Crandall et al. discloses a method for detecting a color object in a digital image. Color quantization is performed on a model image including the target object and on a search image that potentially includes the target object. A plurality of search windows are generated and spatial-color joint probability functions of each model image and search image are computed. The color co-occurrence edge histogram is chosen to be the spatial-color joint probability function. The similarity of each search window to the model image is assessed to enable search windows containing the target object to be designated.

Although the above references disclose techniques for categorizing images, improvements are desired. It is therefore an object of the present invention to provide a novel a method, apparatus and computer readable medium embodying a computer program for automatically categorizing images.

## Summary of the Invention

Accordingly, in one aspect there is provided a method of automatically categorizing an input image comprising:

extracting features of said input image and generating a signature vector representing said input image based on said extracted features; and
processing the signature vector using diverse classifiers to classify said input image based on the combined output of said diverse classifiers.

In one embodiment, the processing comprises generating weighted outputs using the diverse classifiers and evaluating the weighted outputs to classify the input image. The extracted features represent color coherence, edge orientation, and texture co-occurrence of the input image. The diverse classifiers comprise at least two of K-mean-nearest neighbour classifiers, perceptron classifiers and back-propogation neural network classifiers.

During the extracting, each pixel of the input image is compared to adjacent pixels and a hue coherence matrix based on the color coherence of each pixel to its adjacent pixels is populated. An edge orientation coherence matrix based on the edge orientation coherence of each pixel to its adjacent pixels is also populated. The intensity levels of each pair of pixels of the input image are compared and a texture co-occurrence matrix based on the number of times each available pixel intensity level pair occurs in the input image is populated. The hue coherence, edge orientation coherence and texture co-occurrence matrices form the signature vector.

In one embodiment, prior to the extracting, the input image is preprocessed to remove noise and to normalize the input image.

According to another aspect there is provided a categorization system for automatically categorizing an input image comprising:

a signature vector generator extracting features of said input image and generating a signature vector representing said input image based on said extracted features; and

a processing node network processing the signature vector using diverse classifiers to classify said input image based on the combined output of said diverse classifiers.

According to yet another aspect there is provided a method of creating a vector set used to train a neural network node comprising:

extracting features from training images;

generating a signature vector for each training image based on said extracted features thereby to create a vector set for said training images; and

adding additional vectors to said vector set based on a subset of said extracted features thereby to create an expanded vector set.

In one embodiment, the expanded vector set is reduced based on vector density. The additional vectors are added to even vector distribution and to add controlled randomness.

According to still yet another aspect there is provided a computer-readable medium embodying a computer program for creating a vector set used to train a neural network node, said computer program comprising:

computer program code for extracting features from training images;

computer program code for generating a signature vector for each training image based on said extracted features thereby to create a vector set for said training images; and

computer program code for adding additional vectors to said vector set based on a subset of said extracted features thereby to create an expanded vector set.

The method, apparatus and computer readable medium embodying a computer program for automatically categorizing images is flexible, robust and improves accuracy over known image categorizing techniques.

## Brief Description of the Drawings

Embodiments will now be described more fully with reference to the accompanying drawings in which:

Figure 1 is a schematic view of an image categorization system;

Figure 2 is a schematic view of a categorization node forming part of the image categorization system of Figure 1;

Figure 3 is a schematic view of a perceptron linear classifier forming part of the categorization node of Figure 2;

Figure 4 is a schematic view of a back-propagation artificial neural network classifier forming part of the categorization node of Figure 2;

Figure 5 is a flowchart showing the general steps performed during automatic image categorization;

Figure 6 shows a localized color coherence vector matrix;

Figure 7 shows a color coherence window used to generate the localized color coherence matrix of Figure 6;

Figure 8 shows a localized edge orientation coherence vector matrix;

Figure 9 shows an edge orientation coherence window used to generate the localized edge orientation coherence vector matrix of Figure 8;

Figure 10 shows a signature vector; and

Figure 11 is a flowchart showing the steps performed during training image set enhancement.

## Detailed Description of the Embodiments

In the following description, an embodiment of a method and system for automatically categorizing an input image is provided. During image categorization, features of the input image are extracted and a signature vector representing the input image is generated based on the extracted features. The signature vector is processed using diverse classifiers to assign the input image to a class based on the combined output of the diverse classifiers.

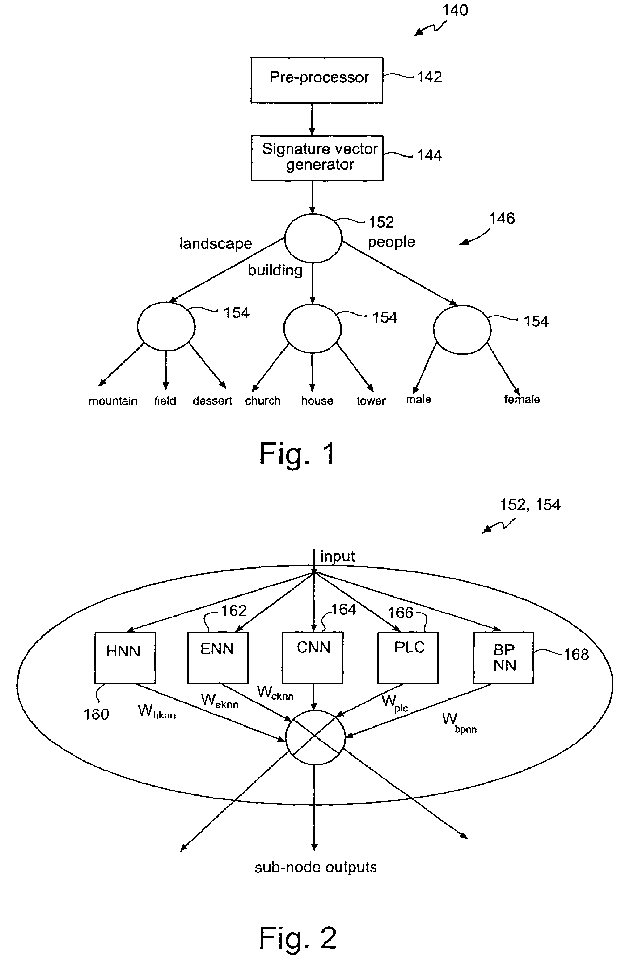

Turning now to Figure 1, a categorization system for automatically categorizing images is shown and is generally identified by reference numeral 140. As can be seen, categorization system 140 comprises a pre-processor 142 for removing noise and for normalizing each input image to be categorized. A signature vector generator 144 receives each filtered and normalized image output by the pre-processor 142 and generates a signature vector representing features n of the image that are to be used to categorize the image. A series of categorization nodes arranged in a tree-like, hierarchical structure 146, that are responsible for categorizing input images into classes and sub-classes, communicates with the signature vector generator 144. The top node 152 of the structure 146 receives the signature vector generated for each input image and provides signature vector output to an underlying row of nodes 154 based on the classes to which the input image is categorized.

In this embodiment, each node 152 and 154 has one input and a plurality of outputs. Each output represents a class or sub-class that is categorized by the node. For example, as illustrated, node 152 categorizes each input image into one of "landscape", "building" and "people" classes. The left node 154 in the underlying row receives the signature vector of each input image that has been assigned to the "landscape" class by node 152 and further categorizes the input image into "mountain", "field" and "desert" subclasses. The middle node 154 in the underlying row receives the signature vector of each input image that has been assigned to the "building" class by node 152 and further categorizes the input image into "church", "house" and "tower" subclasses. The right node 154 of the underlying row receives the signature vector of each input image that has been assigned to the "people" class by node 152 and further categorizes the input image into "male" and "female" subclasses. Although the categorization system 150 as shown includes only a single underlying row of nodes 154 comprising three (3) nodes, those of skill in the art will appreciate that this is for ease of illustration. Many underlying rows of nodes, with each underlying row having many nodes 154, are typically provided to allow input images to be categorized into well defined, detailed subclasses.

Each categorization node 152 and 154 comprises three K-mean-nearest-neighbour (NN) classifiers 160, 162 and 164, one set of N binary perceptron linear (PL) classifiers 166 and one N-class back-propagation neural network (BPNN) classifier 168, where N is the number of classes or sub-classes that is categorized by the node as shown in Figure 2. As will be appreciated, each categorization node includes a number of diverse classifiers, that is each diverse classifier has a different area of strength.

K-mean-nearest-neighbour classifier 160 is responsible for classifying each input image based on the hue component of the signature vector generated for the input image. K-mean-nearest-neighbour classifier 162 is responsible for classifying each input image based on the edge orientation component of the signature vector. K-mean-nearest-neighbour classifier 164 is responsible for classifying each input image based on the texture co-occurrence component of the signature vector.

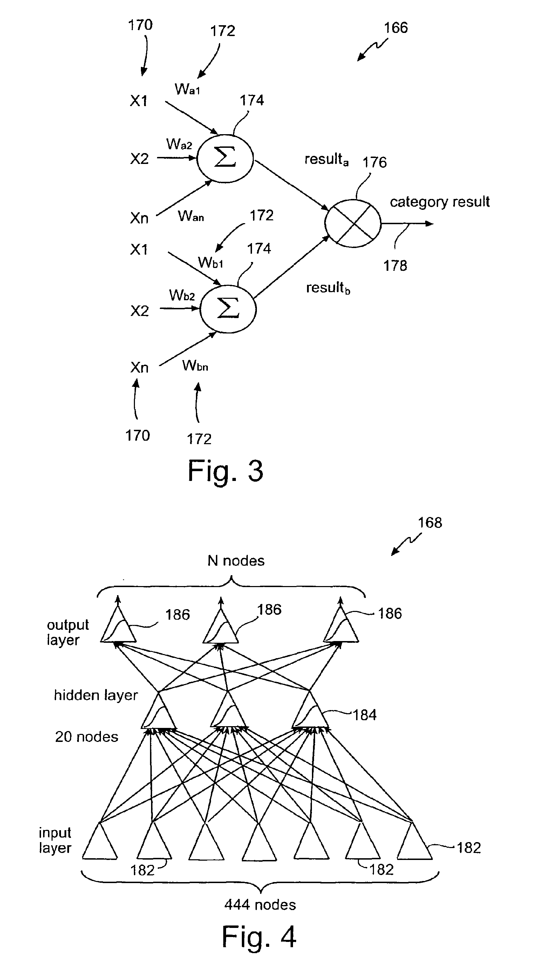

As shown in Figure 3, each binary perceptron linear classifier 166 comprises signature vector inputs 170, weights 172, summing functions 174, a threshold device 176 and an output 178. The threshold device 176 has a setting governing the output based on the summation generated by summing functions 174. If the summation is below the setting of the threshold device 176, the perceptron linear classifier 166 outputs a minus one (-1) value. If the summation is above the setting of the threshold device 176, the perceptron linear classifier 166 outputs a one (1) value.

The back-propagation neural network classifier 168 comprises an input layer including four-hundred and forty-four (444) input nodes 182, a hidden layer of twenty (20) hidden nodes 184 coupled to the input nodes 182 via weights and an output layer of N output nodes 186 coupled to the hidden nodes 184, where N is the number of sub-classes handled by the categorization node as shown in Figure 3.

As is well known, the back-propagation neural network classifier 168 is more powerful than the perceptron linear classifier 166. Depending on the activity on the input nodes 182, the weights are changed by an amount dependent on the error across the layer of hidden nodes 184. When an input signature vector is being classified, the hidden node outputs and errors at the hidden nodes are calculated. When training is being performed, the error across the layer hidden nodes is back-propagated through the hidden layers and the weights on the hidden nodes 184 are adjusted.

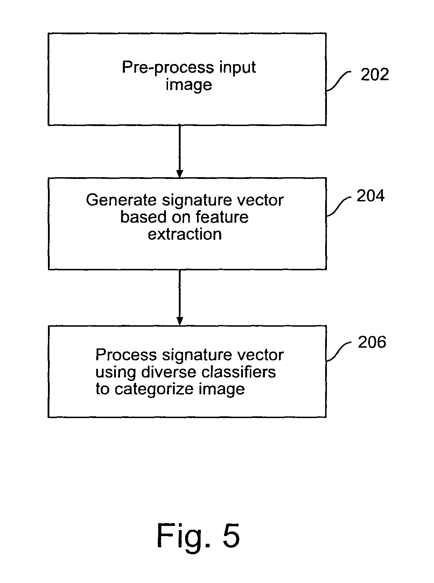

Turning now to Figure 5, a flowchart showing the general steps performed by the categorization system 140 during automatic image categorization is shown. Initially when an input image is to be automatically categorized, the pre-processor 142 filters input image to remove noise and then normalizes the image (step 202). Once filtered and normalized, the signature vector generator 144 subjects the input image to feature extraction to yield a signature vector that represents the features n of the input image that are to be used to categorize the input image (step 204). In this embodiment, the signature vector has four hundred and forty-four (444) bins and is based on color coherence, edge orientation coherence and texture co-occurrence. The signature vector is then fed to structure 146 where the signature vector is processed by the diverse classifiers, specifically, the K-mean-nearest neighbour classifiers 160 to 164, the perceptron linear classifier 166 and the back-propagation neural network classifier 168, thereby to classifying the image (step 206).

At step 202 when the input image is being processed by preprocessor 142, the input image is passed through a 3x3 box filter to remove noise and is then normalized to form a 640x480 hue, saturation, intensity ("HSI") image.

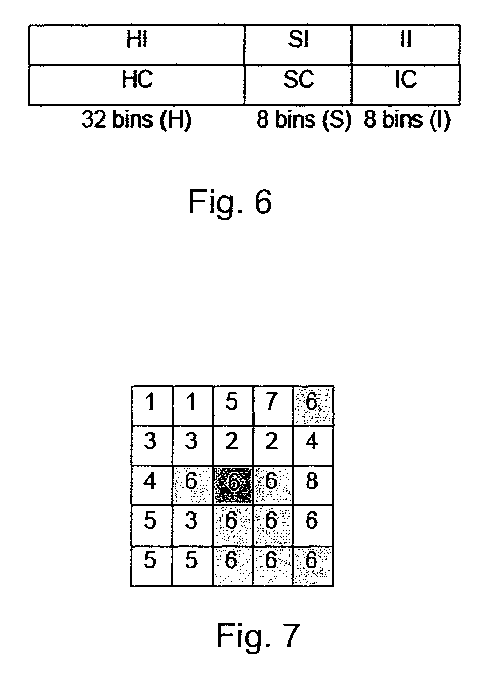

During feature extraction at step 204, a 444-bin signature vector for the input HSI image is constructed. The signature vector is based on a number of features extracted from the input HSI image. Initially, a 48x2 localized color coherence vector (LCCV) matrix in HSI color space as shown in Figure 6 is populated by examining the color coherence/incoherence of each pixel in the HSI image. Each row of the matrix includes, thirty-two (32) bins designated for hue (H), eight (8) bins designated for saturation (S) and eight (8) bins designated for intensity (I). One row of the matrix represents the color coherence of the image pixels and the other row represents the color incoherence of the image pixels.

In this embodiment, the localized color coherence vector (LCCV) of each pixel is used as opposed to the well-known color coherence vector (CCV). The localized color coherence vector LCCV is more efficient to calculate. During color coherence/incoherence determining, a pixel is deemed to be locally color coherent, if and only if, one of the pixels within a specified window that is centered on the pixel in question is the exact same color. In this embodiment, a 5x5 color coherence window is used to determine whether the image pixels are color coherent or color incoherent. Figure 7 shows a 5x5 color coherence window centered on a subject pixel P. The numbers surrounding the subject pixel P express the HSI color information associated with the pixels within the color coherence window. The surrounding pixels designated by shading have color information identical to that of the subject pixel P. Thus, in the example of Figure 7, the subject pixel P has eight (8) local coherent neighbour pixels and sixteen (16) local color incoherent neighbour pixels.

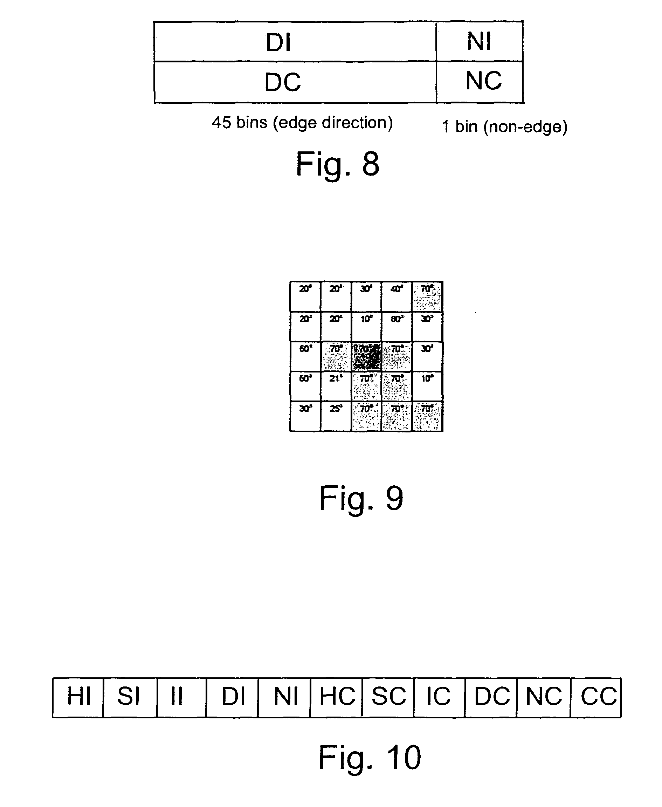

A 46x2 localized edge orientation coherence vector matrix as shown in Figure 8 is also populated by examining local edge orientation coherence/incoherence of each pixel of the HSI image. Each row of the localized edge orientation coherence vector matrix includes forty-five (45) bins for edge direction and one (1) bin for non-edges. Each edge direction bin encompasses eight (8) degrees. One row of the matrix represents the local edge orientation coherence of the image pixels and the other row of the matrix represents the local edge orientation incoherence of the image pixels.

During population of the localized edge orientation coherence vector matrix, a pixel is deemed to be locally edge orientation coherent, if and only if, one of the pixels within a specified window that is centered on the pixel in question has the same edge orientation. In this embodiment, a 5x5 edge orientation coherence window is used. Figure 9 shows an example of the edge orientation coherence window centered on a subject pixel P. The numbers within the window represent the edge orientation associated with the pixels within the edge orientation coherence window. Thus, in the example of Figure 9, the subject pixel P has eight (8) local edge orientation coherent pixels and sixteen (16) local edge orientation incoherent pixels.

A 16x16 texture co-occurrence matrix (GLCM) is also populated based on the pixels of the HSI image. The definition of the GLCM is set forth in the publication entitled "Principals of Visual Information Retrieval" authored by Michael S. Lew (Ed), Springer-Verlag, 2001, ISBN: 1-85233-381-2, the content of which is incorporated herein by reference. As is known, the GLCM characterizes textures and tabulates how often different combinations of adjacent pixel intensity levels occur in the HSI image. Each row of the GLCM represents a possible pixel level intensity and each column represents a possible intensity level of an adjacent pixel. The value in each cell of the GLCM identifies the number of times a particular pixel intensity level pair occurs in the HSI image.

The end result of the above feature extraction is an eleven (11) component signature vector as shown in Figure 10. With the signature vector generated, the components of the signature vector are normalized based on what the input image data represents. In this embodiment, the hue component is normalized by 3x640x480 where 3 is the number of color channels and 640x480 is the image resolution normalized in step 102. The edge orientation component is normalized by the number of edge pixels and the texture co-occurrence component is normalized by 640x480.

With the signature vector normalized, the signature vector is applied to the top node 152 of the structure 146 and fed to each of the classifiers therein. In particular, the K-mean-nearest neighbour classifier 160 receives the hue component of the signature vector and generates weighted output $W_{hnn}$ representing the degree to which the classifier 160 believes the input image represents each class categorized by the node 152. The K-mean-nearest neighbour classifier 162 receives the edge orientation component of the signature vector and generates weighted output $W_{enn}$ representing the degree to which the classifier 162 believes the input image represents each class categorized by the node 152. The K-mean-nearest neighbour classifier receives the texture co-occurrence component of the signature vector and generates weighted output $W_{cnn}$ representing the degree to which the classifier 164 believes the input image represents each class categorized by the node 152.

In particular, during processing of the signature vector components by the classifiers 160 to 164, the signature vector components are compared to average representation vector components within the classes that are evaluated by the node using the vector intersection equation (1) below:

$$I(v1, v2) = \left( \sum_{i=1}^{elements} \min(v1[i], v2[i]) \right) / \max(W1, W2) \qquad (1)$$

where:

    I is the vector intersection between two vector components;

v1 is the input signature vector component;

v2 is average vector component;

$v1[i]$ and $v2[i]$ are the values of the $i^{th}$ elements of vector components $v1$ and $v2$ respectively;

elements is the total number of bins in the vector components; and

$W1$ and $W2$ are the total cumulative sum of the bin values in vector components $v1$ and $v2$ respectively.

In order to achieve the above, during the training process, K mathematical mean representation vectors are determined for each class and act as a generic representation of an image that would fall under that class. These vectors are determined by taking the average of M/K training image vectors, where M is the total number of training image vectors and K is the number of average vectors, where K is selected based on the requirements of the categorization system 140.

The K vector intersections are determined and are then used to determine the class to which the input image belongs. For example, if the majority of the nearest neighbour average representation vectors belongs to class 1, then the signature vector is declared to belong to class 1.

The perceptron linear classifier 166 receives the entire signature vector and generates output $W_{PLC}$ representing the degree to which the perceptron linear classifier 166 believes the input image represents each class categorized by the node 152. In particular, the perceptron linear classifier 166 obtains a hyper-plane that separates the signature vector that belongs to the corresponding class from those that do not. The result of the perceptron linear classifier is obtained and the category with the highest classifier result value is declared as the final class. A sigmoid function is used as the activation function.

Each input node of the back-propagation neural network classifier 168 receives an associated bin of the signature vector. The back-propagation neural network classifier 168 generates weighted output $W_{bpnn}$ representing the degree to which the classifer 168 believes the input image represents each class categorized by the node 152.

The weighted outputs of the classifiers 160 to 168 are then bin-sorted. The class associated with the bin having the highest cumulative sum is then determined and is deemed to be the class to which the input image is categorized by node 152.

Once node 152 has categorized the input image into a class, the signature vector is applied to the node 154 associated with that class for further sub-class categorization in a manner similar to that described above.

For example, if the class output of node 152 is determined to be "building", then the "building" node 154 receives the signature vector for further sub-class categorization. When the node 154 receives the signature vector, the classifiers therein act on the signature vector in the same manner described above to categorize further the input image.

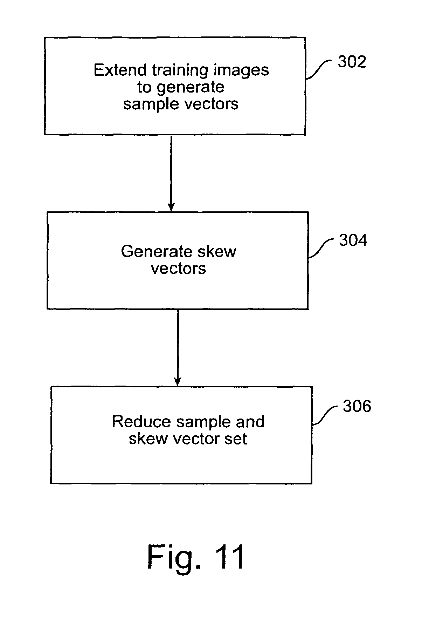

To enhance categorization when only a small set of training images are available, the back-propagation neural network classifiers 168 of the categorization nodes 152, 154 are trained using a vector set extracted from the training images that has been reduced based on vector density. Figure 11 shows the steps performed to generate the vector set from a training image set S. Initially, the training images in the set S are subjected to feature extraction to generate training image signature vectors statistically representative of the classes to which the training images belong (step 302). Skew signature vectors are then generated to add controlled randomness (step 304). The set of training image signature vectors and skew signature vectors is then reduced based on vector density yielding a signature vector set representing features of the training images that is used to train the classifiers of the categorization nodes (step 306).

At step 302, each image in the training image set S is initially expressed by a signature vector V in the same manner described previously. The training image signature vectors V are then copied into a vector set H. Each category in the training image set S is divided into m subsets, where m is a predefined value. In this embodiment m is equal to $n_s/7$ where $n_s$ is the set of features to be extracted from the training images. A subset S' of training features $n_{sub}$ is then randomly chosen from the training image set S. The mathematical mean vector $V_{mean}$ for the subset S' of training features $n_{sub}$ is then calculated (step 210) according to Equation (2) below:

$$V_{mean}(i) = (1/n)\sum_{S^1} G_j(i) \qquad (2)$$

where:

$G_j(i)$ is the $i^{th}$ element of the $j^{th}$ vector in subset S'; and

$V_{mean}(i)$ is the $i^{th}$ element of the mean vector $V_{mean}$.

The calculated mathematical mean vector $V_{mean}$ is added to the vector set H. The root-mean-square (RMS) sample vector $V_{ms}$ for the chosen training features $n_{sub}$ is also calculated according to Equation (3) below:

$$V_{rms}(i) = \sqrt{(I/n)\sum_{S^1}\left(G_j(i)\right)^2} \qquad (3)$$

where:

$V_{rms}(i)$ is the $i^{th}$ element of the RMS vector $V_{rms}$.

The RMS sample vector $V_{ms}$ is then added to the vector set H. The minimum training image signature vector $V_{min}$ for the chosen training features $n_{sub}$ is then calculated according to Equation (4) below:

$$V_{min}(i) = \min\left(G_1(i), G_2(i),...., G_n(i)\right) \qquad (4)$$

where:

$V_{min}(i)$ is the $i^{th}$ element of the minimum training image signature vector $V_{min}$.

The minimum training image signature vector $V_{min}$ is then added to the vector set H. At step 204, for each sample vector element G in the chosen training features $n_{sub}$, a skew vector $V_{skewj}$ is calculated according to Equation (5) below:

$$V_{skewJ}(i) = G_j(i) + P^{\mp}\left(rand\left(V_{min}(i), V_{mean}(i), V_{rms}(i)\right) - G_j(i)\right) \qquad (5)$$

where:

$j$ is the index of the sample vectors (0,1,...,n) in the chosen training features $n_{sub}$;
p is the percentage (0~1) of the statistical vector that was chosen at random; and
$rand(a,b,c)$ represents a randomly chosen one of a, b or c.

The calculated skew vectors $V_{skew0}$, $V_{skew1}$, .... $V_{skewN}$ are also added to the vector set H. The above steps are then repeated until all of the images in the training image set S have been processed. This yields a vector set H containing ($2n_s + 3m = n_e$) vectors.

As will be appreciated, the signature vector set is expanded by inserting extra signature vectors, in this case vectors $V_{mean}$, $V_{min}$ and $V_{rms}$. A distorted vector $V_{skew}$ for each feature in the training image set is also inserted. When the training image set is small, adding these vectors helps during training. In cases where the training image set is large, the extent to which adding the vectors helps training is reduced.

The above process uses the information contained in the training image set to create vectors that are statistically representative of the class to which each training image belongs. By augmenting the representative vectors to the existing training image set, the individual classes become better defined with a smooth estimated data distribution by filling in the gaps in class information that result from uneven initial training image data distribution. Furthermore, the process increases the probability that the vectors in the training image set that are not considered to be representative of the class definition, are eliminated during step 206 as will be described.

The skew vectors are generated to provide a more continuous and well-defined range of similar data upon which the categorization system 140 can train. By providing some controlled variance to the training image set, the skew vectors allow for a broader sense of training without compromising accuracy. The slight controlled randomness helps to reduce the common sparse data problem often experienced by training learning systems when the training images do not provide good classification for perfectly reasonable data due to a high concentration of training images that are not distributed evenly along the range of possible data that fits into the class.

Once the vector set H has been generated, the vector set H is reduced (step 306). During this process, for each vector in the vector set H, denoted by $\{h_k\}$, the inner-class density $DI\{h_k\}$ of the vector on the subset $C_i - \{h_k\}$ is calculated, where $C_i$ is the subset of the vector set H that contains all elements of the class in which $\{h_k\}$ belongs. The inner-class density $DI\{h_k\}$ is defined by Equation (6) below:

$$DI(h_k) = \left( \sum_{c_i - \{h_k\}} I(\{h_k\}, \{h_j\}) \right) / (N_{Ci} - 1), \tag{6}$$

where:

$$(\{h_1\}, \{h_2\}) = \left( \sum_{i=l}^{e} \min(h_1(i), h_2(i)) \right) / \max(A_{h1}, A_{h2}); \quad N_{ci} \text{ is the number of samples in } C_i;$$

$e$ is the total number of elements in the sample vector; and
$A_{h1}$ and $A_{h2}$ are the total cumulative sum of element values in vectors $\{h_1\}$ and $\{h_2\}$ respectively.

For each vector in the vector set H, the outer-class density $DO(h_k)$ of the vector $\{h_k\}$ on the subset C(o) is calculated, where $C_o$ is the subset of the vector set H that contains all elements of the class in which $\{h_k\}$ does not belong. The outer-class density $DO(h_k)$ is defined according to Equation (7) below:

$$DO(h_k) = \left( \sum_{C_0} I(\{h_k\}, \{h_j\}) \right) / (N_{Co}), \tag{7}$$

where:
$N_{Co}$ is the number of samples in subset $C_o$.
For each vector in the vector set H, the coherence density $DC(h_k)$ of the vector $\{h_k\}$ is calculated. The coherence density $DC(h_k)$ is defined according to Equation (8) below:

$$DC(h_k) = DI(h_k) - \alpha \cdot DO(h_k) \tag{8}$$

where:

$\alpha$ is a pre-determined coefficient.

The vectors with the highest coherence densities are stored in vector set R and represent the features from the enhanced training image set that are used to train the classifiers of the categorization nodes.
The above process reduces the vector set based on density data of the training image set. In particular, the density distribution of the training image set is utilized in order to determine which vectors in the vector set H to keep. The vector reduction stage allows for the size of the final training image set to be exact as opposed to being entirely data set dependent. This provides more control to the user allowing the user to fine-tune the training image set to meet the needs of a particular problem or performance restraint. Also, the vector reduction stage does not require any form of learning, which results in fast performance. It also allows for greater consistency in results should different training image sets be processed. The vector reduction stage is model independent and is not designed specifically for a particular categorization system. The generic nature of the vector reduction stage allows it to be used effectively on hybrid systems, which may include different sub-learning systems.
In the embodiment described above, reference is made to specific classifiers. Those of skill in the art will appreciate that alternative classifiers may be used provided that the various classifiers are diverse.
The vector set expanding and reducing can be carried out via a software application including computer executable instructions executed by a processing unit such as a personal computer or other computing system environment. The software application may run as a stand-alone image categorizing tool or may be incorporated into media management systems to provide enhanced functionality to those media management systems. The software application may comprise program modules including routines, programs, object components, data structures etc. and be embodied as computer readable program code stored on a computer readable medium. The computer readable medium is any data storage device that can store data, which can thereafter be read by a computer system. Examples of computer readable medium include for example read-only memory, random-access memory, CD-ROMs, magnetic tape and optical data storage devices. The computer readable program code can also be distributed over a network including coupled computer systems so that the computer readable program code is stored and executed in a distributed fashion.

The node-based categorization structure allows for greater modularity and organization allowing the apparatus to be extended to include new image categories. By integrating the mathematical mean representative vectors, good instant-based classification can be performed without requiring a large pre-existing image collection to be present. By using a weighted committee-based classification system comprising a variety of different classifier types, better accuracy is achieved by harnessing the different areas of strength of each classifier type. Using LCCV and LEOCV as components for the signature vector allows accurate but very condensed representations of images to be maintained providing for faster training and classification.

Although embodiments have been described, those of skill in the art will appreciate that variations and modifications may be made without departing from the spirit and scope thereof as defined by the appended claims.

## Claims

1. A method of automatically categorizing an input image comprising:

   extracting features of said input image and generating a signature vector representing said input image based on said extracted features; and
   processing the signature vector using diverse classifiers to classify said input image based on the combined output of said diverse classifiers.

2. The method of claim 1 wherein said processing comprises generating weighted outputs using said diverse classifiers and evaluating the weighted outputs to classify said input image.

3. The method of claim 2 wherein the extracted features represent color coherence, edge orientation coherence and texture co-occurrence of said input image.

4. The method of claim 3 wherein said diverse classifiers comprise at least two of K-mean-nearest-neighbour classifiers, perceptron classifiers and back-propagation neural network classifiers.

5. The method of claim 4 wherein said diverse classifiers comprise each of K-mean-nearest-neighbour classifiers, perceptron classifiers and back-propagation neural network classifiers.

6. The method of claim 5 wherein the signature vector is processed in stages, with each stage comprising said diverse classifiers.

7. The method of claim 3 further comprising, prior to said extracting, pre-processing said input image.

8. The method of claim 7 wherein said pre-processing comprises at least one of noise filtering and normalizing said input image.

9. The method of claim 8 wherein said pre-processing comprises both noise filtering and normalizing.

10. The method of claim 2 wherein said extracting comprises:

    comparing each pixel of said input image to adjacent pixels; and
    populating a hue coherence matrix based on the color coherence of each pixel to its adjacent pixels.

11. The method of claim 10 wherein said extracting further comprises:

    comparing each pixel of said input image to adjacent pixels; and
    populating an edge orientation coherence matrix based on the edge orientation coherence of each pixel to its adjacent pixels.

12. The method of claim 11 wherein said extracting further comprises:

    comparing intensity levels of each adjacent pair of pixels of said input image; and

populating a texture co-occurrence matrix based on the number of times each available pixel intensity level pair occurs in said input image.

13. The method of claim 12 wherein said hue coherence, edge orientation coherence and texture co-occurrence matrices form said signature vector and wherein during said processing, said signature vector is processed by a hierarchical categorization node structure.

14. The method of claim 13 wherein during said processing, each node of said structure, in response to signature vector input, classifies the input image.

15. The method of claim 14 wherein during said processing, each node uses diverse classifiers to process signature vector input and classify the input image.

16. The method of claim 15 wherein during said processing, at each node weighted outputs of the diverse classifiers are used to classify the input image.

17. A categorization system for automatically categorizing an input image comprising:

a signature vector generator extracting features of said input image and generating a signature vector representing said input image based on said extracted features; and
a processing node network processing the signature vector using diverse classifiers to classify said input image based on the combined output of said diverse classifiers.

18. A categorization system according to claim 17 wherein said processing node network uses weighted outputs of said diverse classifiers to classify said input image.

19. A categorization system according to claim 18 wherein said signature vector comprises a hue coherence component, an edge orientation component and a texture co-occurrence component.

20. A categorization system according to claim 19 wherein said signature vector generator compares each pixel of said input image to adjacent pixels and populates a hue coherence matrix based on the color coherence of each pixel to its adjacent pixels thereby to generate said hue coherence component.

21. A categorization system according to claim 20 wherein said signature vector generator compares each pixel of said input image to adjacent pixels and populates an edge orientation coherence matrix based on the edge orientation coherence of each pixel to its adjacent pixels thereby to generate said edge orientation component.

22. A categorization system according to claim 21 wherein said signature vector generator compares intensity levels of each adjacent pair of pixels of said input image and populates a texture co-occurrence matrix based on the number of times each available pixel intensity level pair occurs in said input image thereby to generate said texture co-occurrence component.

23. A categorization system according to claim 22 wherein each node of said network in response to signature vector input classifies the input image.

24. A categorization system according to claim 18 wherein each node of said network comprises diverse classifiers.

25. A categorization system according of claim 24 wherein said diverse classifiers comprise each of K-mean-nearest-neighbour classifiers, perceptron classifiers and back-propagation neural network classifiers.

26. A method of creating a vector set used to train a neural network node comprising:

extracting features from training images;
generating a signature vector for each training image based on said extracted features thereby to create a vector set for said training images; and
adding additional vectors to said vector set based on a subset of said extracted features thereby to create an expanded vector set.

27. The method of claim 26 further comprising:

    reducing the expanded vector set based on vector density.

28. The method of claim 27 wherein the additional vectors are added to even vector distribution and to add controlled randomness.

Fig. 1

Fig. 2

Fig. 3

Fig. 4

Pre-process input
image                    202

Generate signature vector    204
based on feature
extraction

Process signature vector    206
using diverse classifiers
to categorize image

Fig. 5

| HI | SI | II |
|----|----|----|
| HC | SC | IC |

32 bins (H)  8 bins (S)  8 bins (I)

Fig. 6

| 1 | 1 | 5 | 7 | 6 |
|---|---|---|---|---|
| 3 | 3 | 2 | 2 | 4 |
| 4 | 6 | 6 | 6 | 8 |
| 5 | 3 | 6 | 6 | 6 |
| 5 | 5 | 6 | 6 | 6 |

Fig. 7

| DI | NI |
|----|----|
| DC | NC |

45 bins (edge direction)    1 bin (non-edge)

## Fig. 8

| 20° | 20° | 30° | 40° | 70° |
|-----|-----|-----|-----|-----|
| 20° | 20° | 10° | 80° | 30° |
| 60° | 70° | 70° | 70° | 30° |
| 60° | 21° | 70° | 70° | 10° |
| 30° | 25° | 70° | 70° | 70° |

## Fig. 9

| HI | SI | II | DI | NI | HC | SC | IC | DC | NC | CC |
|----|----|----|----|----|----|----|----|----|----|----|

## Fig. 10

```
┌─────────────────────────┐
│   Extend training images │ ╭ 302
│      to generate         │
│     sample vectors       │
└─────────────────────────┘
            │
            ▼
┌─────────────────────────┐
│     Generate skew        │ ╭ 304
│       vectors            │
└─────────────────────────┘
            │
            ▼
┌─────────────────────────┐
│   Reduce sample and      │ ╭ 306
│     skew vector set      │
└─────────────────────────┘
```

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5872865 A, Normile
- US 6031935 A, Kimmel
- US 6075891 A, Burman
- US 6477272 B, Krumm
- US 6611622 B, Krumm
- US 6668084 B, Minami

- US 20010012062 A, Anderson
- US 20030053686 A, Luo
- US 20020131641 A, Luo
- US 20020183984 A, Deng
- US 20040066966 A, Schneiderman
- US 20040170318 A, Crandall

**Non-patent literature cited in the description**

- Principals of Visual Information Retrieval. Springer-Verlag, 2001